# EUROPÄISCHE PATENTSCHRIFT

(11) **EP 1 161 320 B1**
(45) Veröffentlichungstag und Bekanntmachung des Hinweises auf die Patenterteilung: **09.06.2004**
(21) Anmeldenummer: 00901477.0
(22) Anmeldetag: 15.02.2000
(51) Int. Cl.: B23K 37/04, B23K 26/00, B23K 15/00

(54) **VERFAHREN UND VORRICHTUNG ZUM SCHWEISSEN VON BLECHEN**
METHOD AND DEVICE FOR WELDING SHEETS
PROCEDE ET DISPOSITIF POUR SOUDER DES TOLES

(30) Priorität: 08.03.1999 CH 42399
(43) Veröffentlichungstag der Anmeldung: 12.12.2001
(73) Patentinhaber: ELPATRONIC AG, 8962 Bergdietikon (CH)
(72) Erfinder: BUCHER, Romeo, CH-8236 Büttenhardt (CH); KAEGI, Bruno, CH-8608 Bubikon (CH)
(86) Internationale Anmeldenummer: PCT/CH2000/000086
(87) Internationale Veröffentlichungsnummer: WO 2000/053366

(56) Entgegenhaltungen:
- FR-A- 2 196 218
- US-A- 6 031 199

## Beschreibung

Die Erfindung betrifft ein Verfahren gemäss Oberbegriff des Anspruchs 1. Ferner betrifft die Erfindung eine Vorrichtung gemäss Anspruch 6.

Es ist bekannt, aus Blechen mit in der Regel unterschiedlichen Eigenschaften (z.B. Dicke, Material) sogenannte tailored blanks zu schweissen, welche anschliessend zu einem Formkörper verformt werden. Solche Formkörper werden z.B. in der Automobilindustrie verwendet. Die Schweissung der tailored blanks erfolgt z.B. mittels Laser- oder Elektronenstrahlschweissung. Bei der Laserstrahlschweissung ist es zur Erzielung einer qualitativ einwandfreien, zur späteren Umformung geeigneten Schweissnaht erforderlich, dass die mit ihren Kanten stumpf aneinanderliegenden Bleche ein sehr geringes Spaltmass zwischen sich aufweisen, welches z.B. 0,08 mm nicht überschreiten sollte, um mit einem fokussierten Laserstrahl von 0,2 mm Durchmesser einwandfrei schweissen zu können. Beim Schneiden mittels Scheren oder beim Stanzen der einzelnen Blechteile Blechteile können indes Fehler auftreten und/oder Bleche können sich aufgrund von inneren Spannungenverformen, was das Einhalten eines Spaltmasses von 0,08 mm zwischen den Blechen verhindert. Ein Nacharbeiten der Kanten aller Bleche bei deren Herstellung ist aufwendig. Ebenso ist es aus Platz- und Handlingsgründen unerwünscht, separate Bearbeitungsstationen vor der Schweisseinrichtung anordnen zu müssen. Der Erfindung liegt deshalb die Aufgabe zugrunde, ein Schweissverfahren bzw. eine Schweissvorrichtung für tailored blanks zu schaffen, welche eine einwandfreie Schweissung ohne die genannten Nachteile ermöglichen.

Diese Aufgabe wird bei einem Verfahren bzw. bei einer Vorrichtung der eingangs genannten Art durch die kennzeichnenden Merkmale des Anspruchs 1 bzw. des Anspruchs 6 gelöst.

Dadurch, dass der Kantenverlauf beider Bleche erfasst wird und eine der Kanten als Referenzkante ausgewählt wird, muss nur eine der Kanten bearbeitet werden, wobei die Steuereinrichtung die dominierende Kante bzw. Referenzkante so auswählen kann, dass der Bearbeitungsaufwand möglichst gering wird. Es ergibt sich somit eine Paarung der Bleche in der Schweissmaschine, so dass keine separate Bearbeitungsstation benötigt wird.

Bei einer bevorzugten Ausführungsform wird die Paarung nicht ausgeführt, wenn der Kantenverlauf der beiden Bleche so verschieden ist, dass sich ein zu hoher Bearbeitungsaufwand ergeben würde. In diesem Fall wird das eine Blech ausgeschieden und durch ein anderes Blech ersetzt. Das ausgeschiedene Blech kann - je nach seinem Kantenverlauf - ganz aus dem Produktionsprozess genommen werden oder zurück zu einem Blechstapel geführt werden, von welchem es später zusammen mit einem anderen Blech erneut der Schweissmaschine zugeführt wird.

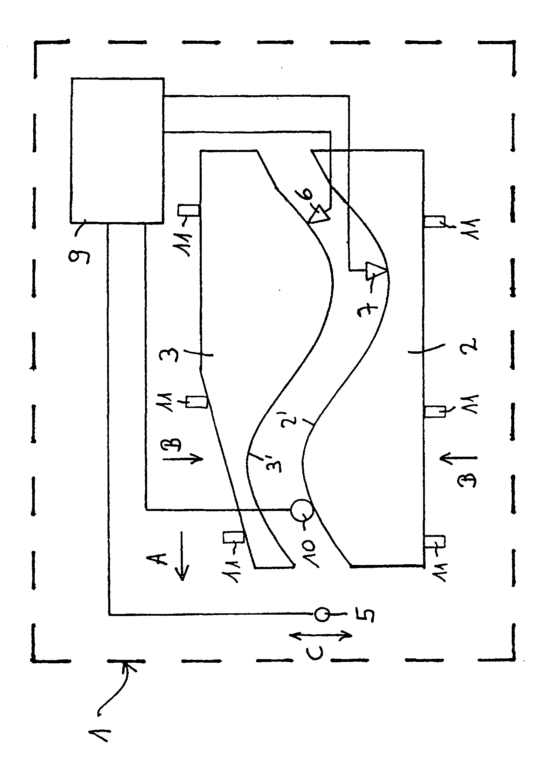

Im folgenden werden Ausführungsbeispiele der Erfindung anhand der Figuren näher erläutert. Dabei zeigt die Figur grob schematisch eine Schweissvorrichtung zur Durchführung des Verfahrens.

Die Figur zeigt grob schematisch eine Schweissvorrichtung 1, in welcher zwei Bleche 2 und 3 angeordnet sind, welche mittels eines Laserstrahls 5 miteinander verschweisst werden sollen. In den gezeigten Stellung sind die Bleche vor Eintritt in die Schweisszone mit ihren zu verschweissenden Kanten 2' und 3' voneinander beabstandet gehalten. Die Bleche liegen dabei auf einer nicht dargestellten Fördereinrichtung auf, mittels welcher sie in Richtung A durch die Schweisszone hindurch verfahren werden können. Seitlich sind die Bleche durch Führungen 11 gehalten. In der gezeigten beabstandeten Stellung kann jede Blechkante 2' und 3' durch einen Messfühler 6 bzw. 7 abgefahren werden, um den genauen Verlauf der jeweiligen Kante zu erfassen. Anstelle zweier Messfühler könnte auch nur ein Messfühler vorgesehen sein, welcher nacheinander zunächst die eine und danach die andere Kante abtastet. Anstelle eines mechanischen Abtastfühlers könnte auch eine optische oder auf einem anderen Messprinzip beruhende Kantenverlaufsdetektion vorgesehen sein. Die Fühler 6 bzw. 7 werden durch nicht weiter dargestellte Bewegungsmittel der jeweiligen Kante entlang geführt und melden deren Verlauf an eine Steuereinrichtung 9. In dieser wird der genaue Verlauf beider Kanten erfasst und miteinander verglichen. Aus dem Kantenverlauf kann die Steuereinrichtung 9 bestimmen, ob das maximal zulässige Spaltmass eingehalten wird, wenn die Kanten zur Schweissung aneinanderanliegen. Ist dies der Fall, so können die beiden Bleche ohne weitere Nachbearbeitungsmassnahmen durch die Führungen 11 zusammengepresst werden, welche sich dabei in Richtung der Pfeile B bewegen, und die beiden Bleche werden in dieser aneinanderliegenden Stellung in Richtung des Pfeiles A bewegt und unter dem von oben oder von unten auf den Spalt auftreffenden Laserstrahl 5 verschweisst. Sofern die Kanten 2' und 3' nicht linear verlaufen, wie dies in der Figur dargestellt ist, wird der Laserstrahl 5 durch Verschiebung in Richtung des Pfeiles C dem Spalt nachgeführt. Dabei kann die Steuereinrichtung für den Laserstrahl 5, welche ebenfalls von der Steuereinrichtung 9 gebildet sein kann oder von einer separaten Steuereinrichtung, welche mit der Steuereinrichtung 9 verbunden ist, auf den mittels der Messfühler erfassten Kantenverlauf zurückgreifen, um den Laserstrahl 5 zu steuern. Diese Steuerung aufgrund des effektiven Kanten- bzw. Spaltverlaufs kann die bisher übliche optische Spalterfassung ersetzen oder ergänzen.

Wenn die Steuereinrichtung 9 bei der Kantenerfassung indes feststellt, dass die Kanten 2' und 3' in ihrer bestehenden Form nicht so zusammengefügt werden können, dass das maximale zulässige Spaltmass eingehalten werden kann, so bestimmt die Steuereinrichtung 9 eine der Kanten als dominierende Kante bzw. als Referenzkante und steuert die Anpassung der anderen Kante durch ein Bearbeitungswerkzeug 10 derart, dass diese an die Referenzkante angepasst wird. Die Referenzkante wird dabei derart ausgewählt, dass sich für die andere Kante eine möglichst geringe Bearbeitung ergibt. Als Bearbeitungswerkzeug kann z.B. eine Rolle 10 vorgesehen sein, welche die zu bearbeitende Kante drückt, so dass diese dem Druck nachgibt und entsprechend verformt wird. Das Bearbeitungswerkzeug 10 kann dabei mit wechselndem Druck auf die Kante entlang dieser verschoben werden. Die entsprechende mechanische, pneumatische oder hydraulische Bewegungseinrichtung für die Rolle 10 ist in der Figur nicht dargestellt. Das Drücken mit einer Rolle ist die bevorzugte Bearbeitungsmethode, da dabei keine Späne anfallen und das Aufquetschen der jeweiligen Blechkante die Schweissung nicht behindert oder allenfalls sogar begünstigt. Mit Drücken kann der Kantenverlauf ohne weiteres im Bereich von 1/10 mm verändert werden, was für den vorliegenden Zweck genügend ist. Andere bekannte Bearbeitungsmethoden, wie z.B. Fräsen oder Schleifen, können indes auch eingesetzt werden. Wenn die bearbeitete Kante an die Referenzkante angepasst ist, kann das Bearbeitungswerkzeug 10 zurückgezogen werden und die beiden Bleche werden wiederum durch die Stellmittel 11 in Pfeilrichtung B aneinandergepresst und durch das Fördermittel unter dem Laserstrahl 5 in Pfeilrichtung A hindurchgeführt. Auch in diesem Fall kann der Laser entsprechend der Kantendaten bewegungsgesteuert werden.

Stellt die Steuereinrichtung 9 nach der Erfassung der beiden Kantenverläufe fest, dass die beiden Bleche auch durch Bearbeitung mit dem Werkzeug 10 innert vorgegebener Zeit nicht soweit zur Übereinstimmung bringbar sind, dass das Spaltmass eingehalten werden kann, so wird die Bearbeitung unterlassen und das eine Blech wird ausgeschieden. Dies kann durch Verfahren des einen Bleches in Richtung A aus der Schweissmaschine heraus oder in Gegenrichtung oder seitlich aus der Schweissmaschine heraus erfolgen. Das ausgeschiedene Blech kann entsorgt werden, wenn dessen Kantenlage eine vorgegebene maximale Abweichung von einer Soll-Kantenlage überschreitet. Ist dies nicht der Fall, so kann das ausgeschiedene Blech zurück zu einem Blechstapel gefördert werden, von welchem es später mit einem anderen Blech zusammen wieder in die Schweissmaschine gelangt. In diesem Fall kann die Kombination der beiden Kantenverläufe zu einer Paarung führen, welche die Einhaltung des zulässigen Spaltmasses durchaus ermöglicht.

Das gezeigte Verfahren bzw. die Vorrichtung erlaubt auf einfache und rasche Weise die Paarung von Blechen zur Bildung von tailored blanks in der Schweissmaschine. Besonders bevorzugt ist das Verfahren wenn der Spalt bzw. Schweissnahtverlauf nicht linear ist.

## Patentansprüche

1. Verfahren zum Schweissen von Blechen (2, 3) zu tailored blanks, **dadurch gekennzeichnet, dass** in der Schweissmaschine der Kantenverlauf beider Bleche erfasst, der Kantenverlauf eines der Bleche als dominierender Kantenverlauf bestimmt und die andere Kante (2', 3') zur Anpassung an die dominierende Kante nachbearbeitet wird, und dass die Bleche nachfolgend geschweisst werden.

2. Verfahren nach Anspruch 1, **dadurch gekennzeichnet, dass** ein Blech vor der Nachbearbeitung ausgeschieden wird, wenn die Abweichung seiner Kante von der dominierenden Kante ein vorbestimmtes Mass überschreitet.

3. Verfahren nach Anspruch 1 oder 2, **dadurch gekennzeichnet, dass** die Kanten mittels mindestens einem Messfühler (6, 7) abgetastet werden, um den Kantenverlauf zu bestimmen.

4. Verfahren nach Anspruch 1 bis 3, **dadurch gekennzeichnet, dass** die nachzubearbeitende Kante durch Drücken bearbeitet wird.

5. Verfahren nach einem der Ansprüche 1 bis 4, **dadurch gekennzeichnet, dass** die Schweissstrahlführung mittels oder mit Einbezug des erfassten dominierenden Kantenverlaufs erfolgt.

6. Vorrichtung zum Schweissen von Blechen (2, 3) zu tailored blanks, **gekennzeichnet durch** mindestens eine Erfassungseinrichtung (6, 7, 9) zur Erfassung des Kantenverlaufs der zu schweissenden Blechkanten (2', 3'), eine Steuereinrichtung (9) zur Bestimmung einer der erfassten Kanten als dominierende Kante und zur Abgabe von Steuersignalen an mindestens eine in der Vorrichtung angeordneten Bearbeitungseinheit (10) zur Bearbeitung der nichtdominierenden Kante.

7. Vorrichtung nach Anspruch 6, **dadurch gekennzeichnet, dass** die Steuereinrichtung zur Abgabe von Steuersignalen an eine Ausscheideeinheit ausgestaltet ist, mittels welcher eines der Bleche vor der Schweissung aus der Vorrichtung ausscheidbar ist.

8. Vorrichtung nach Anspruch 6 oder 7, **dadurch gekennzeichnet, dass** die Erfassungseinrichtung mindestens einen Messfühler (6, 7) umfasst.

9. Vorrichtung nach einem der Ansprüche 6 bis 8, **dadurch gekennzeichnet, dass** die Bearbeitungseinrichtung mindestens ein Drückwerkzeug, insbesondere eine Rolle (10) umfasst.

10. Vorrichtung nach einem der Ansprüche 6 bis 9, **dadurch gekennzeichnet, dass** die Steuereinrichtung (9) die Schweissstrahlsteuerung bildet oder zur Datenabgabe an eine solche ausgestaltet ist.

## Claims

1. Method for welding metal sheets (2, 3) to form tailored blanks, **characterized in that** the edge line of both sheets is detected in the welding machine, the edge line of one of the sheets is identified as the dominant edge line and the other edge (2', 3') is reworked to match it to the dominant edge, and **in that** the sheets are then welded.

2. Method according to Claim 1, **characterized in that** a sheet is discarded before reworking takes place, if the deviation of its edge from the dominant edge exceeds a predetermined amount.

3. Method according to Claim 1 or Claim 2, **characterized in that** the edges are sensed by means of at least one sensor (6, 7) to determine the edge line.

4. Method according to Claims 1 to 3, **characterized in that** the edge requiring reworking is machined by pressing.

5. Method according to any one of Claims 1 to 4, **characterized in that** guidance of the welding beam is governed by or in part by the detected dominant edge line.

6. Apparatus for welding metal sheets (2, 3) to form tailored blanks, **characterized by** at least one detection device (6, 7, 9) for detecting the edge line of the sheet edges (2', 3') to be welded, a control unit (9) for identifying one of the detected edges as the dominant edge and for transmitting control signals to at least one machining unit (10) arranged in the apparatus for machining the non-dominant edge.

7. Apparatus according to Claim 6, **characterized in that** the control unit is configured for the transmission of control signals to a discard unit whereby one of the sheets can be discarded from the apparatus before welding takes place.

8. Apparatus according to Claim 6 or Claim 7, **characterized in that** the detection device comprises at least one sensor (6, 7).

9. Apparatus according to any one of Claims 6 to 8, **characterized in that** the machining device comprises at least one pressing tool, in particular a roller (10).

10. Apparatus according to any one of Claims 6 to 9, **characterized in that** the control unit (9) forms the welding beam control or is configured for transmission of data to such a control.

## Revendications

1. Procédé pour souder des tôles (2, 3) à des flans sur mesure (« tailored blanks »), **caractérisé en ce que**, dans la machine à souder, l'allure des arêtes des deux tôles est saisie, l'allure de l'arête d'une des tôles est déterminée comme allure d'arête dominante et l'autre arête (2', 3') est retouchée pour s'adapter à l'arête dominante, et **en ce que** les tôles sont ensuite soudées.

2. Procédé selon la revendication 1, **caractérisé en ce qu'**une tôle est écartée avant la retouche, lorsque l'écart de son arête par rapport à l'arête dominante dépasse une dimension prédéterminée.

3. Procédé selon l'une quelconque des revendications 1 ou 2, **caractérisé en ce que** les arêtes sont détectées à l'aide au moins d'une sonde (6, 7) pour déterminer l'allure des arêtes.

4. Procédé selon les revendications 1 à 3, **caractérisé en ce que** l'arête à retoucher est travaillée par pression.

5. Procédé selon l'une quelconque des revendications 1 à 4, **caractérisé en ce que** le guidage du rayon de soudure est effectué au moyen ou en tenant compte de l'allure de l'arête dominante saisie.

6. Dispositif pour souder des tôles (2, 3) à des flans sur mesure, **caractérisé par** au moins un dispositif de saisie (6, 7, 9) pour saisir l'allure d'arête des arêtes des tôles à souder (2', 3'), un dispositif de commande (9) pour déterminer une des arêtes saisies comme arête dominante et pour émettre des signaux de commande à au moins une unité de travail (10) disposée dans le dispositif pour façonner l'arête dominante.

7. Dispositif selon la revendication 6, **caractérisé en ce que** le dispositif de commande est équipé pour émettre des signaux de commande à une unité d'écartement, au moyen de laquelle une des tôles peut être écartée du dispositif avant la soudure à partir.

8. Dispositif selon l'une quelconque des revendications 6 ou 7, **caractérisé en ce que** le dispositif de saisie comprend au moins une sonde (6, 7).

9. Dispositif selon l'une quelconque des revendications 6 à 8, **caractérisé en ce que** le dispositif de façonnage comprend au moins un outil de pression, notamment un rouleau (10).

10. Dispositif selon l'une quelconque des revendications 6 à 9, **caractérisé en ce que** le dispositif de commande (9) forme la commande du rayon de soudure ou est équipé comme tel pour l'émission de données à une telle commande.
